# EUROPÄISCHE PATENTANMELDUNG

(11) **EP 1 506 918 A2**
(43) Veröffentlichungstag der Anmeldung: **16.02.2005**
(21) Anmeldenummer: 04019124.9
(22) Anmeldetag: 12.08.2004
(51) Int. Cl.: B62K 21/12

(54) **Lenkerbügel für Rennsportfahrräder, Mountainbikes und andere Fahrräder**

(30) Priorität: 13.08.2003 DE 20312483 U
(71) Anmelder: Schilgen, Holger, 52070 Aachen (DE); Schilgen, Ludger Dr., 48149 Münster (DE)
(72) Erfinder: Schilgen, Holger, 52070 Aachen (DE); Schilgen, Ludger Dr., 48149 Münster (DE)

(57) **Zusammenfassung**

Es wird ein neuer Lenkerbügel für Rennräder, Mountainbikes und andere Fahrräder vorgestellt, der gegenüber den Lenkerbügeln nach Stand der Technik Vorteile aufweist. Es werden ergonomischere Griffpositionen geschaffen, die sich insbesondere beim Fahren "im Stehen" und beim Einzelfahren auf Flachstrecken ("Zeitfahren") vorteilhaft auswirken.

## Beschreibung

Die Neuerung bezieht sich auf einen Lenkerbügel für Rennsportfahrräder, Mountainbikes und andere Fahrräder.

Der Lenkerbügel eines Fahrrades ist nicht allein als Lenkorgan, wie das Lenkrad eines Automobils, anzusehen. Eine wichtige Funktion des Lenkerbügels ist darüber hinaus, dass mit seiner Hilfe das Gegenmoment beim Treten verstärkt wird und der Fahrer sich dabei gleichzeitig festhalten, balancieren und abstützen, bei verstärktem Pedaldruck ― beim Fahren im Stehen ― sogar am Lenker "ziehen" kann.

Die Formen der Lenkerbügel im Stande der Technik sind vielfältig. Für den Radsport wurden besondere Lenkerbügel ausgebildet, wobei im klassischen Radrennsport der sogenannte "MAES-Rennbügel" das bekannteste Modell ist. Gattungsbildend kennzeichnet sich dieses Modell dadurch, dass ein vom Vorbau getragenes Lenkerrohr vorgesehen ist, das einen rechten und einen linken Lenkerholm ausbildet, wobei sich an das im wesentlichen horizontale gerade Mittelteil des Lenkerrohres vertikale Lenkerrohrhömer anschließen, auf denen die ergonomisch ausgebildeten Griffe der Bremskörper angebracht sind. Hierbei ist das das Mittelteil ausbildende horizontale Lenkerrohr beiderseits nach vorne abgebogen und geht dann nach unten gerichtet in die vertikalen Lenkerrohrhörner über, die mit ihren freien Enden rückwärts gerichtet enden.

Der MAES-Rennbügel ermöglicht ― je nach den Erfordernissen ― verschiedenartige Griffpositionen. Beim gemäßigten Fahren mit aufgerichtetem, leicht nach vorne gebeugten Oberkörper ergreift der Fahrer das Mittelteil des Lenkerrohres bzw. auch die nach vorne gerichteten Übergangsstellen vom Mittelteil zu den Lenkerhörnern.
Auch die Bremsgriffe werden zur Abstützung benutzt. Bei schnellem Fahren allerdings neigt sich der Fahrer mit seinem Oberkörper weit nach vom und unten bis zur Waagerechten. Dabei fasst er die Enden der Lenkerrohrhörner.

Bei größerer Kraftanforderung, z.B. an Steigungen und im Gebirge, setzt der Fahrer zusätzlich sein Körpergewicht ein: er stellt sich auf die Pedalen und fährt "im Stehen", ("im Wiegetritt"). Für diese Art des Fahrens "im Stehen" ist der MAES-Bügel nicht sonderlich geeignet. Die auf dem Mittelteil befindlichen, oberen Griffpositionen sind ungünstig, da der Fahrer mit seinen Händen einen allzu schmalen Lenkerabschnitt, d.h. einen allzu kurzen Hebel hat und er das Fahrrad nicht ausreichend auf Kurs halten und am Lenker "ziehen" kann.

Eine weitere Griffposition im Übergangsbereich vom Mittelteil des Lenkerbügels zu den Lenkerrohrhörnern ist zwar etwas breiter, aber ― bedingt durch die Biegung des Lenkerrohres nach vorne ― werden die Greifhände in eine auswärts gedrehte Stellung gezwungen, was der Ergonomie völlig entgegensteht.

Die Griffposition an den Lenkerenden kommt beim "Wiegetritt" ebenfalls nicht infrage, da der Körper mit seinem Gewicht hier nicht als Ganzes über den Pedalen steht, sondern der Oberkörper stark nach unten gebeugt ist und durch die Arme getragen werden muss und deshalb von den Armen sogar unnütze Stützarbeit geleistet wird. Der Effekt der Nutzbarmachung des Körpergewichtes als eine auf die Pedalen gerichtete Kraft wird dadurch deutlich verringert.

Zum effektvollen Fahren "im Stehen" mit dem MAES-Rennbügel bleibt praktisch nur der Halt an den Bremsgriffen als Griffposition übrig: Der Fahrer umklammert mit beiden Händen die Bremsgriffe. Jetzt hat er zwar den gewünschten langen Hebel, d.h. er nutzt die gesamte Lenkerbreite. Nachteilig aber ist, dass der Fahrer die Bremsgriffe nur mit Daumen und zwei Fingern, nicht aber mit der ganzen Hand umgreifen kann, was ergonomisch nachteilig ist. Nachteilig kommt gleichfalls hinzu, dass der Fahrer durch die Anordnung der Bremskörper deutlich vor und unterhalb des Lenkerrohrmittelteils ebenfalls mit seinem Körper in eine vorgebeugte Haltung gezwungen wird. Dies wurde bereits oben als nachteilig vermerkt wegen des dadurch bedingten verminderten Effektes des eingesetzten Körpergewichts.

Um das Besprochene zu verdeutlichen ein Beispiel: beim mittlerweile auch als Wettkampfsport ausgeübten Mountainbikefahren, bei dem ― wie der Name schon sagt ― häufig auch deutlich steilere Steigungen erklommen werden als mit dem Rennrad und folglich auch häufig "im Stehen" gefahren wird, gehört der breite Lenker, der ohne wesentliche Biegungen gefertigt ist und einen langen Hebelarm darstellt, zur Standardausrüstung. Der Fahrer kann sein ganzes Körpergewicht auf die Pedalen bringen und zusätzlich seine Arm- und Rumpfkraft als Gegenmoment nutzen zur verstärkten Einwirkung auf die Pedalen. Da aber am Mountainbikebügel an beiden Enden normalerweise zwei "Hörnchen", die nach vorn zeigen, montiert sind, ist die limitierte Maximalbreite des Lenkers, um jeweils den Betrag des Durchmessers dieser Hörnchen, vermindert. Die Hände können also auch hier die Gesamtbreite des eigentlichen Lenkers nicht voll nutzen.

Der Neuerung liegt die Aufgabe zugrunde, einen verbesserten Lenker zu schaffen, bei dem insbesondere das gerade Mittelteil des Lenkerrohres eine größere Breite aufweist, so dass ein weiter außen liegender Griffbereich geschaffen wird. Dieser ermöglicht aufgrund der Hebelgesetze eine wirkungsvollere völlig ergonomische Handhabbarkeit, wobei der Kraftfluss beim Treten, ― insbesondere beim Fahren im Stehen ― verbessert wird. Andererseits bleiben die Vorteile, die der MAES-Bügel bietet, erhalten.

Diese der Neuerung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, dass die Enden des geraden Mittelteiles nicht wie im Stand der Technik nach vorne und dann nach unten und anschießend nach hinten zur Ausbildung der Lenkerrohrhörner abgebogen sind, sondern dass der Lenkerbügels so ausgebildet ist, dass die Enden des Mittelteils nach hinten und dann nach unten oder schräg nach hinten abfallend ausgebildet sind und sich von dieser, ihrer tiefsten Lage, wieder mit ihren freien Enden nach vom und aufwärts erstrecken.

Das Lenkerrohr ist also vorzugsweise im Übergang vom geraden Mittelteil zu den Lenkerrohrhörnern nach hinten zurückgebogen, so dass eine Rückbiegung entsteht, die dadurch, dass sie nach hinten gerichtet ist, ergonomisch sehr gut noch als Griffbereich genutzt werden kann. Der Fahrer hat so den Vorteil, die gesamte, durch Wettkampfvorschriften der UCI (Union Cycliste Internationale) limitierte Lenkerbreite voll auszunutzen, was dem Rennradfahrer und dem Mountainbikefahrer mit den herkömmlichen Lenkern nicht möglich ist.

Die nach der Neuerung gestalteten freien Enden der nach vorn endenden Lenkerrohrhörner können aufwärts nach vorn weisen. Sie können aber auch aufwärts nach vom und anschließend zurückgebogen geformt sein. Sie können ― insbesondere die Enden ― ergonomisch gestaltet und mit besonders gestalteten Griffteilen ausgerüstet werden. Sie bilden dann einen zusätzlichen neuen Griffbereich, der vor dem Mittelteil des Lenkerbügels angeordnet ist. Beim Ergreifen dieser Griffteile kann sich der Fahrer mit dem Unterarm bzw. mit der Handwurzel auf dem Mittelteil des Lenkerbügels zusätzlich abstützen, was die Haltearbeit der Arme bei der Abstützung des Oberkörpers deutlich vermindert.

Ein Ausführungsbeispiel der Neuerung wird nachfolgend anhand der Zeichnungen erläutert. Die Zeichnungen zeigen dabei in
- Fig. 1: eine schaubildliche Darstellung des Lenkerbügels von der Seite gesehen, in
- Fig. 2: eine Darstellung des Lenkerbügels von vom gesehen, in
- Fig. 3: eine Darstellung des Lenkerbügels von oben gesehen, in
- Fig. 4: eine Darstellung des Lenkerbügels von der Seite gesehen mit zurückgerichteten Lenkerrohrhömem, in
- Fig. 5: eine Darstellung des klassischen Rennbügels im Stande der Technik (MAES-Bügel), mit Bremsgriffen, von der Seite gesehen.

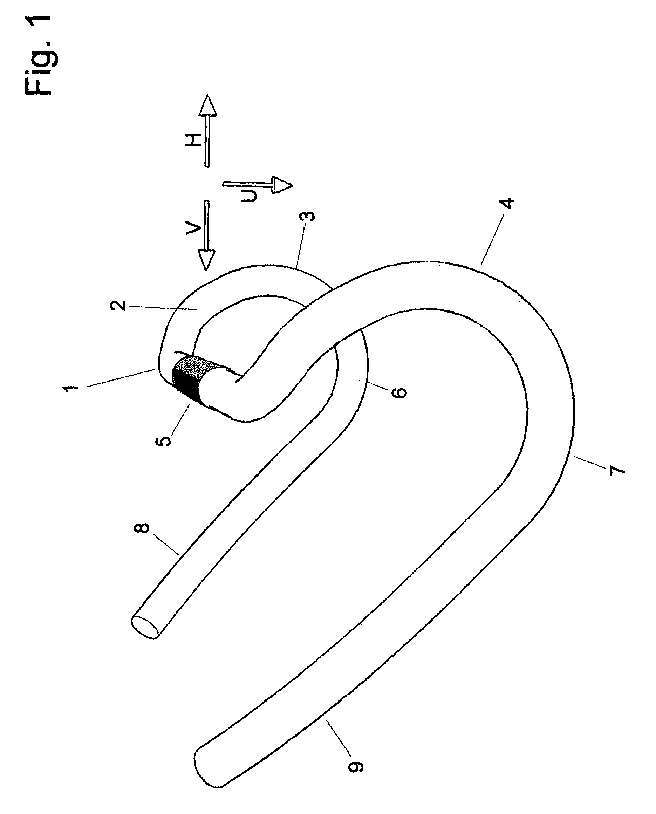

Zur Verdeutlichung der in den Unterlagen erwähnten Richtungen, die mit "vorn", "hinten" und "unten" benannt sind, wurden Richtungspfeile in die Fig. 1 bis Fig. 5 eingezeichnet. Diese wurden mit (V) = vom, (H) = hinten und (U) = unten gekennzeichnet. Hierdurch ergeben sich logisch die Richtungen oben, mittig, rechts und links. Die Bezeichnung "nach außen" gibt dabei die Richtungen, von der Mitte des symmetrischen Lenkerbügels 1 ausgehend, zu den beiden Seiten hin, nach rechts und links, an. Die Bezeichnung "nach innen" gibt dabei die Richtungen von den Außenbereichen, also von der rechten und linken Seiten des Lenkerbügels 1 ausgehend, zur Mitte des Lenkerbügels 1 hin, an.

In Fig. 1 ist ein Lenkerbügel 1 dargestellt, der durch ein Lenkerrohr 2 gebildet wird. Der Lenkerbügel besteht aus zwei symmetrischen Hälften, die - ausgehend vom mittelständigen Vorbau (der hier nicht dargestellt wurde) - einen rechten Lenkerholm 3 und einen linken Lenkerholm 4 schaffen. Jeder der beiden Lenkerholme 3 bzw. 4 wird durch die jeweilige Hälfte des graden Mittelteils 5 des Lenkerbügels 1 gebildet, an das sich jeweils an beiden Endbereichen, also links und rechts, Lenkerrohrhömer 6 und 7 anschließen. Diese Lenkerrohrhörner 6 und 7 enden mit "fieien Enden" 8 und 9.
Fig. 1 zeigt also, dass das den Lenkerbügel 1 ausbildende Lenkerrohr 2 an den Enden des Mittelteils 5 das jeweils rechte und linke Lenkerrohrhorn 6 und 7 dadurch gestaltet, dass es sich durch Biegungen nach hinten und unten und dann nach vom und von dieser tiefsten Lage oder Stellung aus wieder nach vom aufwärtssteigend erstreckt.

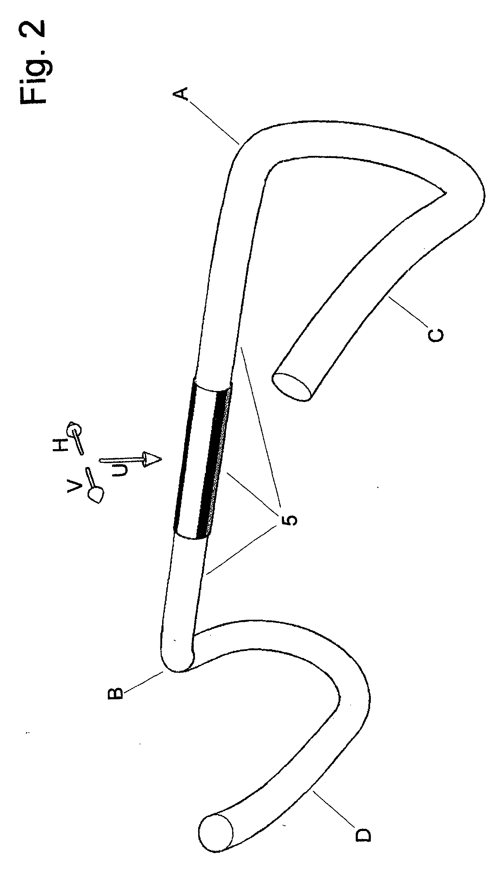

Fig. 2 zeigt, dass durch die Vermeidung konstruktionsbedingter seitlicher Begrenzungen an den Endabschnitten des Mittelteil 5 Griffbereiche A und B geschaffen werden, die die maximale (durch internationale Wettkampfvorschriften der UCI limitierte) Lenkerbreite auszunutzen ermöglichen.

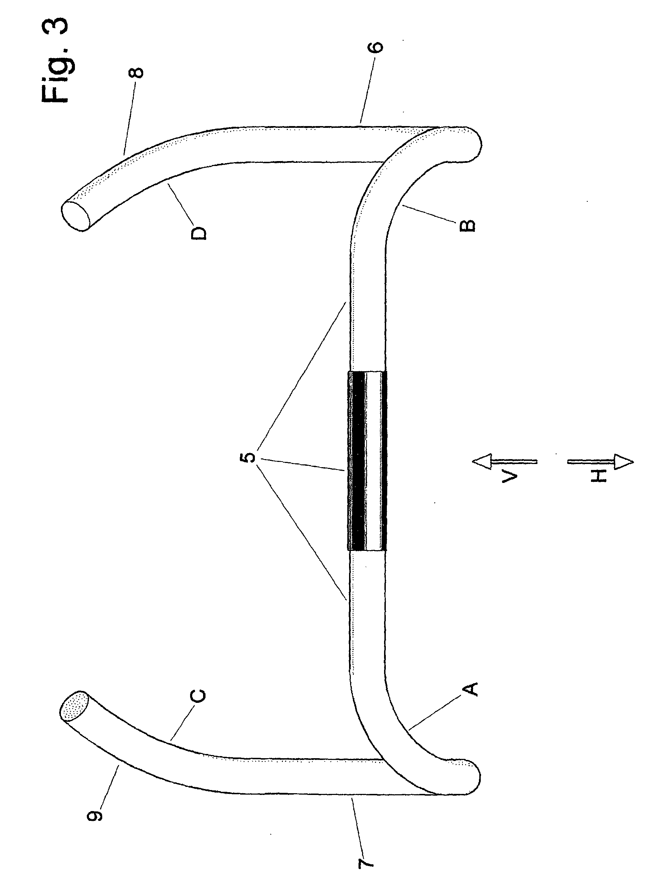

Fig. 3 zeigt in der Aufsicht ebenfalls die neuen Griffbereiche A und B und verdeutlicht darüber hinaus die hierdurch mögliche Nutzung der gesamten Lenkerbreite - unter strenger Beachtung ergonomischer Anforderungen. Fig. 3 zeigt gleichzeitig, dass durch die näher zusammenrückenden "fieien Enden" 8 und 9 der Lenkerrohrhörner 6 und 7 Griffbereiche C und D geschaffen werden, die es ermöglichen, dass der diese freien Enden ergreifende Fahrer sich gleichzeitig mit seinen Handwurzeln oder Unterarmen auf dem Mittelteil 5 abstützen kann. Dadurch wird die "Haltearbeit" der Arme deutlich reduziert und gleichzeitig eine nahezu ideale, windschnittige "Stromlinienhaltung" des Fahrers herbeigeführt.

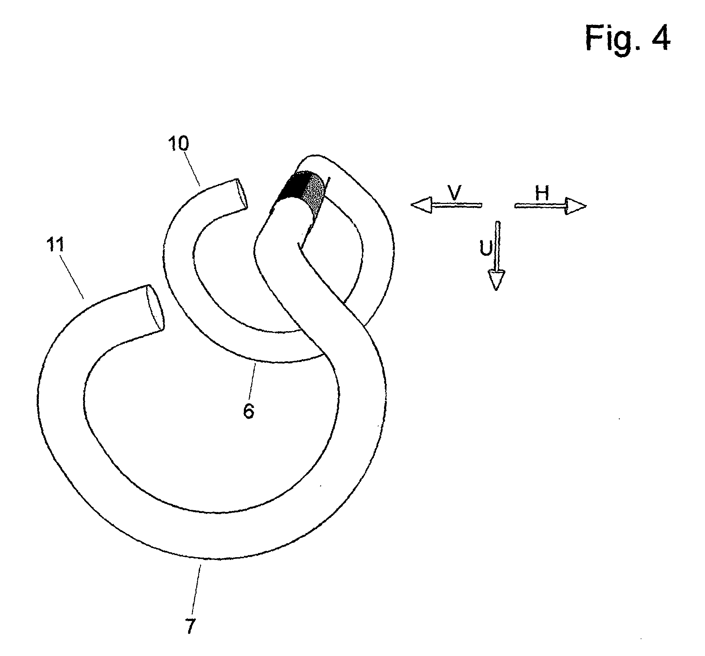

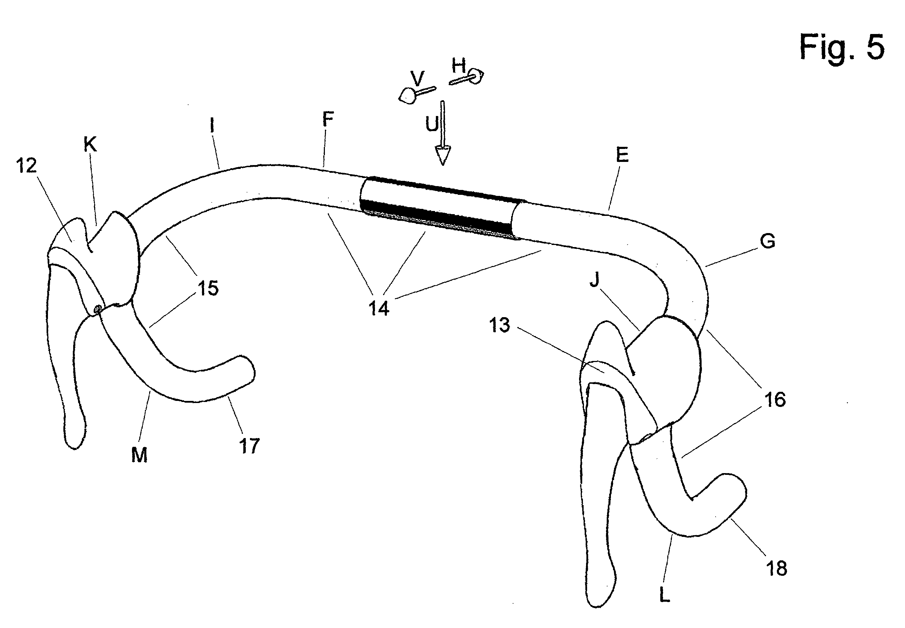

Fig. 4 zeigt, dass die in der Fig. 1 und Fig. 3 dargestellten freien Enden 8 und 9 der Lenkerrohrhörner 6 und 7 Rückbiegungen erfahren, die mit 10 und 11 gekennzeichnet sind. Diese Rückbiegungen ermöglichen Variationen der Montage von Bremshebeln und oder Schalthebeln und ähneln damit in diesem Bereich dem klassischen Rennbügel, der in Fig. 5 dargestellt ist.
Fig. 5 zeigt den klassischen Rennlenker (MAES-Bügel mit montierten Bremsgriffen 12 und 13) nach dem Stand der Technik. Die mit diesem Lenker möglichen Griffbereiche E und F, G und I, J und K, L und M sind hier dargestellt.

### Bezugzeichenliste:

- 1: Lenkerbügel, als Ganzes
- 2: Lenkerrohr, der Werkstoff des Lenkerbügels
- 3: Lenkerholm rechts
- 4: Lenkerholm links
- 5: Mittelteil
- 6: Lenkerrohrhorn rechts
- 7: Lenkerrohrhorn links
- 8: freies Ende rechts
- 9: freies Ende links
- 10: freies Ende, nach hinten gebogen, rechts
- 11: freies Ende, nach hinten gebogen, links
- 12: MAES-Bügel-Bremsgriff rechts
- 13: MAES-Bügel-Bremsgriff links
- 14: MAES-Bügel-Mittelteil
- 15: MAES-Bügel-Lenkerrohrhorn rechts
- 16: MAES-Bügel-Lenkerrohrhorn links
- 17: MAES-Bügel-Lenkerende rechts
- 18: MAES-Bügel-Lenkerende links

- A: Griffbereich am Ende des Mittelteils 5 links
- B: Griffbereich am Ende des Mittelteils 5 rechts
- C: Griffbereich am Ende des Lenkerrohrhornes 7 links
- D: Griffbereich am Ende des Lenkerrohrhornes 6 rechts
- E: MAES-Bügel-Griftbereich auf dem Mittelteil 14 links
- F: MAES-Bügel-Griffbereich auf dem Mittelteil 14 rechts
- G: MAES-Bügel-Griffbereich im Zwischenbereich von Mittelteil 14 und Lenkerrohrhorn 16 links
- I: MAES-Bügel-Griffbereich im Zwischenbereich von Mittelteil 14 und Lenkerrohrhorn 15 rechts
- J: MAES-Bügel-Griffbereich auf dem Bremsgriff 13 links
- K: MAES-Bügel-Griffbereich auf dem Bremsgriff 14 rechts
- L: MAES-Bügel-Griffbereich am Lenkerende 18 links
- M: MAES-Bügel-Griffbereich am Lenkerende 17 rechts

## Patentansprüche

1. Lenkerbügel für Rennsportfahrräder und Mountainbikes und andere Fahrräder mit einem vom Vorbau getragenen Lenkerrohr (2), das einen rechten und einen linken Lenkerholm (3) und (4) ausbildet, wobei sich an die Endabschnitte des im Wesentlichen vorzugsweise geraden Mittelteils (5) des Lenkerbügels (1), Lenkerrohrhörner (6) und (7) anschließen, **dadurch gekennzeichnet, dass** an den Enden des Mittelteiles (5) das das Lenkerrohrhorn (6) und (7) ausbildende Lenkerrohr (2) des rechten und linken Lenkerholmes (3) und (4) nach hinten (H) und dann nach unten (U) und dann nach vorne (V) abgebogen ist und sich von dieser, seiner tiefsten Lage wieder beiderseits mit seinen freien Enden nach vom und oben erstreckt.

2. Lenkerbügel nach Anspruch 1, **dadurch gekennzeichnet, dass** an den Enden des Mittelteiles (5) das das rechte und linke Lenkerrohrhorn (6) und (7) ausbildende Lenkerrohr (2) des rechten und linken Lenkerholmes (3) und (4) nach hinten (H) und dann nach unten (U) und gleichzeitig nach außen, anschließend nach vorn (V) abgebogen ist und sich von dieser, seiner tiefsten Lage wieder beiderseits mit seinen freien Enden (8) und (9) nach vom und oben erstreckt.

3. Lenkerbügel nach Anspruch 1, **dadurch gekennzeichnet, dass** an den Enden des Mittelteiles (5) das das rechte und linke Lenkerrohrhorn (6) und (7) ausbildende Lenkerrohr (2) des rechten und linken Lenkerholmes (3) und (4) nach hinten (H) und dann nach unten (U) und gleichzeitig nach innen, anschließend nach vorn (V) abgebogen ist und sich von dieser, seiner tiefsten Lage wieder beiderseits mit seinen freien Enden (8) und (9) nach vorn und oben erstreckt.

4. Lenkerbügel nach Anspruch 1, **dadurch gekennzeichnet, dass** an den Enden des Mittelteiles (5) das das rechte und linke Lenkerrohrhorn (6) und (7) ausbildende Lenkerrohr (2) des rechten und linken Lenkerholmes (3) und (4) nach hinten (H) und unten (U), d. h. schräg von vom (V) nach hinten (H) abfallend, und dann nach vorne (V) abgebogen ist und sich von dieser, seiner tiefsten Lage wieder mit seinen freien Enden nach vorn und oben erstreckt.

5. Lenkerbügel nach Anspruch 1 und 4, **dadurch gekennzeichnet, dass** an den Enden des Mittelteiles (5) das das rechte und linke Lenkerrohrhorn (6) und (7) ausbildende Lenkerrohr (2) des rechten und linken Lenkerholmes (3) und (4) nach hinten (H) und unten (U), d. h. schräg von vorn (V) nach hinten (H) abfallend, und gleichzeitig nach außen, anschließend nach vom (V) abgebogen ist und sich von dieser, seiner tiefsten Lage wieder mit seinen freien Enden (8) und (9) nach vom und oben erstreckt.

6. Lenkerbügel nach Anspruch 1 und 4, **dadurch gekennzeichnet, dass** an den Enden des Mittelteiles (5) das das rechte und linke Lenkerrohrhorn (6) und (7) ausbildende Lenkerrohr (2) des rechten und linken Lenkerholmes (3) und (4) nach hinten (H) und unten (U), d. h. schräg von vom (V) nach hinten (H) abfallend, und gleichzeitig nach innen, anschließend nach vom (V) abgebogen ist und sich von dieser, seiner tiefsten Lage wieder mit seinen freien Enden (8) und (9) nach vom und oben erstreckt.

7. Lenkerbügel nach einem oder mehreren der vorhergehenden Ansprüche, **dadurch gekennzeichnet, dass** die freien Enden (8) und (9) der Lenkerrohrhörner (6) und (7) mit ergonomisch ausgebildeten Griffteilen ausgerüstet sind.

8. Lenkerbügel nach einem oder mehreren der vorhergehenden Ansprüche, **dadurch gekennzeichnet, dass** die freien Enden (8) und (9) der Lenkerrohrhörner (6) und (7) in ihren Endabschnitten (10) und (11) gegen das Mittelteil (5) des Lenkerrohes (2) nach hinten (H) zurückgerichtet sind.

9. Lenkerbügel nach einem oder mehreren der vorhergehenden Ansprüche, **dadurch gekennzeichnet, dass** der gesamte Lenkerbügel (1) aus einem einzigen, mit Biegungen versehenen durchlaufenden Werkstück besteht.

10. Lenkerbügel nach einem oder mehreren der vorhergehenden Ansprüche, **dadurch gekennzeichnet, dass** die Krümmungen des Lenkerbügels (1) nicht oder nicht nur durch Biegungen, sondern teilweise oder vollständig durch auf Gehrung geschnittene Elemente gestaltet werden.

11. Lenkerbügel nach einem oder mehreren der vorhergehenden Ansprüche, **dadurch gekennzeichnet, dass** der Lenkerbügel (1) aus mehreren Teilstücken besteht, die dauerhaft und irreversibel, oder reversibel, durch Klemm- oder Schraubverbindungen miteinander verbunden sind.

12. Lenkerbügel nach einem oder mehreren der vorhergehenden Ansprüche, **dadurch gekennzeichnet, dass** der Lenkerbügel (1) aus Metall besteht.

13. Lenkerbügel nach einem oder mehreren der vorhergehenden Ansprüche, **dadurch gekennzeichnet, dass** der Lenkerbügel (1) aus armiertem Kunststoff besteht.
